# EUROPÄISCHE PATENTSCHRIFT

(11) **EP 3 826 936 B1**
(45) Veröffentlichungstag und Bekanntmachung des Hinweises auf die Patenterteilung: **17.07.2024**
(21) Anmeldenummer: 19736490.4
(22) Anmeldetag: 17.05.2019
(51) Int. Cl.: B65D 53/00, C08L 23/20, B65D 51/14, B65D 53/02, C09K 3/10

(54) **GEFAESSVERSCHLUSS MIT DICHTUNGSELEMENT**
CONTAINER CLOSURE WITH A SEALING ELEMENT
DISPOSITIF DE FERMETURE DE RÉCIPIENT DOTÉ D'UN ÉLÉMENT D'ÉTANCHÉITÉ

(30) Priorität: 23.07.2018 DE 102018117766; 12.11.2018 DE 102018128283
(43) Veröffentlichungstag der Anmeldung: 02.06.2021
(73) Patentinhaber: Silgan Holdings Inc., Stamford, CT 06901 (US)
(72) Erfinder: KINTSCHER, Juergen, 30900 Wedemark (DE); MANIERA, Andreas, 31535 Neustadt (DE)
(74) Vertreter: Ter Meer Steinmeister & Partner
(86) Internationale Anmeldenummer: PCT/IB2019/054106
(87) Internationale Veröffentlichungsnummer: WO 2020/021348

(56) Entgegenhaltungen:
- EP-A2- 0 184 324
- WO-A1-2016/188982
- WO-A1-2017/162817
- US-A1- 2003 069 320

## Beschreibung

Die Erfindung betrifft ein Dichtungselement aus einer Polymerzusammensetzung in einem Gefäßverschluss, wobei ein mit dem Gefäßverschluss verschlossenes Gefäß exzellente Dichtheitseigenschaften aufweist.

Polymerzusammensetzungen in Gefäßverschlüssen sind aus dem Stand der Technik bekannt. Speziell zeigen Polymerzusammensetzungen, die kein PVC (Polyvinylchlorid) enthalten, einige Nachteile gegenüber solchen Zusammensetzungen, die PVC enthalten. Beispielsweise sind PVC-freie Polymerzusammensetzungen relativ kostenintensiv. Auch kann die Verarbeitbarkeit PVCfreier Polymerzusammensetzungen, verglichen mit PVC-haltigen Polymerzusammensetzungen, nachteilig sein. Um die Verarbeitbarkeit, insbesondere die Fließfähigkeit, zu verbessern, werden häufig flüssige Komponenten, z.B. Weißöl, in den Zusammensetzungen eingesetzt, die sich zudem kostenreduzierend auswirken. Der Einsatz von beispielsweise Weißöl hat auch eine weichmachende Wirkung, jedoch ist Weißöl lipophil, sodass dieses als Komponente der Polymerzusammensetzung des Dichtungselements des Gefäßverschlusses dazu neigt, unerwünscht in ein Füllgut zu migrieren, wenn der Gefäßverschluss ein befülltes und verschlossenes Gefäß verschließt. Die Migration von Weißöl ist erhöht, wenn das Füllgut ölhaltig oder fetthaltig ist.

WO 2009/059788 offenbart eine PVC-freie Polymerzusammensetzung für ein Dichtungselement in einem Gefäßverschluss. Ein Beispiel einer Zusammensetzung ist dort auf den Seiten 12 und 13 dargestellt. Dieses dort dargestellte Beispiel enthält einen erheblichen Anteil an Weißöl von etwa 33 Gew.-%, wodurch hohe Migrationswerte zu erwarten sind, wenn die Zusammensetzung in einem Gefäßverschluss eingesetzt wird, der ein Gefäß verschließt, das ein fetthaltiges oder ölhaltiges Füllgut beinhaltet. Ein anderes Beispiel einer Zusammensetzung ist auf S. 23 von WO 2009/059788 gezeigt. In diesem Beispiel wird kein Weißöl eingesetzt, jedoch als Hauptkomponente ein Copolymer, das Polyethyleneinheiten und ein kurzkettiges Alken Monomer (C₃ bis C₈) umfasst. Das Copolymer weist Eigenschaften auf, die typisch für kostenintensive olefinische Block-Copolymere sind.

WO 2017/162817 A1 betrifft eine Polyolefinzusammensetzung, insbesondere geeignet zur Herstellung von Dichtungen für Verschlüsse, umfassend: A) 60 bis 89 Gew.-% eines Copolymers von Buten-1 mit Ethylen mit einem copolymerisierten Ethylengehalt von bis zu 18 Mol-% und keinem Schmelzpeak, der bei der DSC bei dem zweiten Heizscan nachweisbar ist; B) 11 bis 40 Gew.-% eines Ethylenpolymers mit einer Dichte von 0,900 bis 0,970 g/cm³, gemessen gemäß ISO 1183 bei 23°C; wobei die Mengen von A) und B) auf das Gesamtgewicht von A) + B) bezogen sind.

Eine Aufgabe der Erfindung liegt darin, eine Polymerzusammensetzung bereitzustellen, die als Dichtungselement in einem Gefäßverschluss eingesetzt werden kann, die zu akzeptablen Kosten herstellbar ist und sehr geringe Migrationswerte aufweist.

Gelöst wird die Aufgabe durch einen Gefäßverschluss nach Anspruch 1, der ein Gefäß nach Anspruch 14 verschließen kann, und der in einem Verfahren zur Herstellung eines verschlossenen und befüllten Gefäßes nach Anspruch 15 eingesetzt werden kann.

Der Gefäßverschluss weist ein Dichtungselement auf. Das Dichtungselement umfasst eine Polymerzusammensetzung. Die Polymerzusammensetzung umfasst ein Buten-Copolymer mit einer Schmelztemperatur Tₘ zwischen 30°C und 130°C. Die Schmelztemperatur Tₘ wird im Rahmen einer DSC-Messung durch die zweite Aufheizkurve bei einer Heizrate von 10°C/min gemessen.

Der Gefäßverschluss umfasst typischerweise einen Träger aus Metall, Kunststoff oder Metall und Kunststoff (Composite-Verschluss). Der Träger des Gefäßverschlusses kann mit einem Haftlack beschichtet sein, insbesondere wenn der Träger aus Metall ist oder Metall umfasst. Auf den Träger kann die Polymerzusammensetzung aufgetragen werden und das Dichtungselement darauf geformt werden. Ebenso kann das Dichtungselement außerhalb des Träger geformt und anschließend in den Träger eingelegt werden, wobei das Dichtungselement anderweitig zur Haftung an den Träger (z.B. über Druck und Temperatur) gebracht werden kann.

Das Dichtungselement kann scheibenförmig ausgebildet sein oder ringförmig ausgebildet sein.

Bei klassischen Gefäßverschlüssen, z.B. bei Nockendrehverschlüssen, wird der überwiegende Teil des Dichtungselements in dem flächigen Bereich des Trägers gebildet, sodass ein oberes Ende einer Gefäßmündung mit dem Dichtungselement in Kontakt gerät, wenn der Gefäßverschluss ein Gefäß verschließt. Insbesondere bei Press-on Twist-off-Gefäßverschlüssen (PT-Gefäßverschlüssen) kann auch ein erheblicher Anteil des Dichtungselements im Schürzenbereich des Trägers gebildet werden. Bei Composite-PT-Gefäßverschlüssen, beispielsweise bei unter dem Markennamen Band-Guard vertriebenen Gefäßverschlüssen, kann ein Kunststoffgewinde des Gefäßverschlusses mit einem Gegengewinde eines Gefäßes (z.B. ein Glasgefäß mit Außengewinde) zusammenwirken.

Ein PT-Gefäßverschluss wird beim Verschließen eines Gefäßes auf die Gefäßmündung aufgepresst (Press-on) während das Dichtungselement im erwärmten Zustand ausreichend fließfähig ist. Ein Außengewinde im Mündungsbereich des Gefäßes verursacht ein Innengewinde (als Negativ des Außengewindes) in dem Dichtungselementbereich auf der Schürze des Gefäßverschlussträgers. Entfernt wird der PT-Gefäßverschluss von dem Gefäß durch eine Drehbewegung (Twist-off).

Es hat sich herausgestellt, dass der Einsatz eines Buten-Copolymers mit einer Schmelztemperatur Tₘ zwischen 30 °C und 130 °C in einer Polymerzusammensetzung eines Dichtungselements eines Gefäßverschlusses die Herstellung von Gefäßverschlüssen mit exzellenten Eigenschaften ermöglicht.

Bevorzugt liegt die Schmelztemperatur Tₘ des Buten-Copolymer zwischen 40°C und 125°C. Besonders bevorzugt liegt die Schmelztemperatur Tₘ des Buten-Copolymer zwischen 80°C und 125°C. Die Schmelztemperatur Tₘ des Buten-Copolymer kann ebenso zwischen 105°C und 125°C liegen.

Das Buten des Buten-Copolymers ist bevorzugt ein 1-Buten.

Ein Comonomer des Buten-Copolymers kann Propylen sein, so dass das Buten-Copolymer ein Buten-Propylen-Copolymer ist.

Das Buten-Copolymer kann ein Bipolymer sein, so dass das Buten-Copolymer zusätzlich zu Buten genau ein weiteres Comonomer, z.B. Propylen, aufweist.

In der Polymerzusammensetzung kann das Buten-Copolymer einen Anteil zwischen 0,1 Gew.-% und 80 Gew.-% aufweisen. Das Buten-Copolymer kann auch zwischen 5 Gew.-% und 60 Gew.-% in der Polymerzusammensetzung vorhanden sein. Bevorzugt liegt der Anteil des Buten-Copolymers zwischen 8 Gew.-% und 55 Gew.-% in der Polymerzusammensetzung.

Gewichtsprozent-Angaben mit Bezug auf die Polymerzusammensetzung beziehen sich auf den Anteil der jeweiligen Komponente relativ zu dem Gesamtgewicht aller Komponenten in der Polymerzusammensetzung.

Die Polymerzusammensetzung kann ein weiteres Buten-Copolymer umfassen. Dieses weitere Buten-Copolymer ist eine andere Polymerart als das bereits beschriebene Buten-Copolymer. Das bereits beschriebene Buten-Copolymer und das weitere Buten-Copolymer in der Polymerzusammensetzung können sich durch ihre physikalischen Eigenschaften (z.B. Dichte, Schmelztemperatur, Härte, usw.) unterscheiden. Die Buten-Copolymere können sich auch durch ihren Aufbau (Block-Copolymer, random-Copolymere, usw.) unterscheiden. Auch können sich die Buten-Copolymere durch die Art ihrer Comonomere (Ethylen, Propylen, usw.) unterscheiden.

Das Buten in dem weiteren Buten-Copolymer kann ein 1-Buten sein. Ethylen kann ein Comonomer des weiteren Buten-Copolymers sein.

Der copolymerisierte Buten-Anteil des weiteren Buten-Copolymers kann bei mindestens 60 mol.-%, insbesondere mindestens 80 mol.-%, liegen.

Das weitere Buten-Copolymer kann ein Buten-Bipolymer sein, sodass das Buten-Bipolymer zusätzlich zu dem Buten genau eine weitere Art eines Comonomers aufweist.

Das weitere Buten-Copolymer kann in der Polymerzusammensetzung mit einem Anteil zwischen 10 Gew.-% und 80 Gew.-% vertreten sein. Bevorzugt liegt das weitere Buten-Copolymer mit einem Anteil zwischen 22 Gew.-% und 70 Gew.-% in der Polymerzusammensetzung vor. Speziell enthält die Polymerzusammensetzung zwischen 40 Gew.-% und 65 Gew.-% des weiteren Buten-Copolymers.

Die Polymerzusammensetzung kann ein Polyethylen umfassen.

Das Polyethylen kann ein Homo-Polyethylen sein. Speziell kann das Homo-Polyethylen ein LDPE (low density polyethylene) oder ein HDPE (high density polyethylene) sein.

Die Polymerzusammensetzung kann zwischen 5 Gew.-% und 60 Gew.-% des Polyethylens umfassen. Bevorzugt liegt der Anteil des Polyethylens in der Polymerzusammensetzung zwischen 10 Gew.-% und 45 Gew.-%. Speziell ist das Polyethylen zwischen 15 Gew.-% und 35 Gew.-% in der Polymerzusammensetzung enthalten.

Die Polymerzusammensetzung kann ein Random-Propylen-Copolymer umfassen.

Das Random-Propylen-Copolymer kann Ethylen als Comonomer aufweisen. Insbesondere ist das Random-Propylen-Copolymer ein Bipolymer.

Bevorzugt enthält die Polymerzusammensetzung ein random-Propylen-Ethylen-Copolymer.

Das random-Propylen-Copolymer kann zwischen 5 Gew.-% und 60 Gew.-% in der Polymerzusammensetzung enthalten sein. Speziell liegt der Anteil des random-Propylen-Copolymers zwischen 10 Gew.-% und 45 Gew.-%. Besonders bevorzugt beträgt der Anteil des random-Propylen-Copolymers zwischen 15 Gew.-% und 35 Gew.-% in der Polymerzusammensetzung.

Die Polymerzusammensetzung kann auch ein Buten-Homopolymer umfassen, das speziell zwischen 5 Gew.-% und 60 Gew.-% in der Polymerzusammensetzung enthalten ist.

Das Buten des Buten-Homopolymers ist speziell ein 1-Buten.

Insbesondere liegt das Buten-Homopolymer in der Polymerzusammensetzung zwischen 10 Gew.-% und 45 Gew.-% vor. Speziell liegt der Anteil des Buten-Homopolymers in der Polymerzusammensetzung zwischen 15 Gew.-% und 35 Gew.-%.

Die Polymerzusammensetzung kann auch ein Copolymer umfassen, wobei Styrol ein Comonomer des Copolymers ist.

Insbesondere ist das Copolymer, das Styrol als Comonomer umfasst, ein SBS, SEPS, SEEPS oder SEBS. Besonders bevorzugt ist das Copolymer, das Styrol als Comonomer umfasst, ein SEBS.

Das Styrol enthaltene Copolymer kann in der Polymerzusammensetzung zwischen 10 Gew.-% und 70 Gew.-% enthalten sein. Bevorzugt beträgt der Anteil des Styrol enthaltenden Copolymers zwischen 20 Gew.-% und 60 Gew.-% in der Polymerzusammensetzung. Das Styrol enthaltende Copolymer kann auch zwischen 35 Gew.-% und 55 Gew.-% in der Polymerzusammensetzung enthalten sein.

Das Buten-Copolymer, insbesondere das Buten-Propylen-Copolymer, kann in der Polymerzusammensetzung mit einem Anteil von mindestens 80 Gew.-% vorliegen. Das Buten-Copolymer kann auch zu mindestens 90 Gew.-% in der Polymerzusammensetzung enthalten sein. In diesem Fall kann das Buten-Copolymer, insbesondere das Buten-Propylen-Copolymer, die einzige polymere Komponente der Polymerzusammensetzung sein und die Polymerzusammensetzung neben dem Buten-Copolymer lediglich Additive enthalten.

Durch die vorteilhafte Zusammensetzung der Polymerzusammensetzungen kann ein hoher Anteil von Komponenten, die bei 20 °C und 1000 hPa flüssig sind, vermieden werden. Ein Beispiel einer solchen Komponente, die bei 20 °C und 1000 hPa flüssig ist, ist Weißöl. Daher umfasst die Polymerzusammensetzung bevorzugt maximal 10 Gew.-% einer Komponente die bei 20°C und 1000 hPa flüssig ist. Speziell umfasst die Polymerzusammensetzung maximal 5 Gew.-% einer solchen Komponente. Insbesondere umfasst die Polymerzusammensetzung keine solche Komponente (im Rahmen der analytischen Möglichkeiten am Anmeldetag).

Die Polymerzusammensetzung kann eine Polyolefin-Zusammensetzung sein. Entsprechend umfasst die Polymerzusammensetzung ausschließlich Polyolefine als polymere Bestandteile. Additive können in der Polymerzusammensetzung enthalten sein, auch wenn diese keine Polyolefine sind und es sich bei der Polymerzusammensetzung um eine Polyolefin-Zusammensetzung handelt.

Bevorzugt enthält die Polymerzusammensetzung kein PVC (Polyvinylchlorid).

Es ist bevorzugt, dass die Polymerzusammensetzung keinen Sauerstoff-Scavenger enthält.

Die Polymerzusammensetzung kann so ausgestaltet sein, dass diese einen statischen Reibungskoeffizienten von maximal 0,50, bevorzugt von maximal 0,40, aufweist. Der Reibungskoeffizient wird bestimmt nach DIN EN ISO 8295. Ein geringer Reibungskoeffizient der Polymerzusammensetzung ermöglicht eine vorteilhafte Anwendungsmöglichkeit des Gefäßverschlusses, insbesondere beim Verschließen eines Gefäßes mit dem Gefäßverschluss, wobei es zu einer Reibung zwischen dem Dichtungselement des Gefäßverschlusses und dem Gefäß kommt und beim Öffnen eines mit einem Gefäßverschluss verschlossenen Gefäßes.

Ein geringer Reibungskoeffizient ist insbesondere bei einem geringen Anteil von Komponenten, die bei 20°C und 1000 hPa flüssig sind, oft nur schwer zu erreichen.

Die Polymerzusammensetzung umfasst typischerweise Additive. Bevorzugt umfasst die Polymerzusammensetzung maximal 15 Gew.-% Additive. Speziell umfasst die Polymerzusammensetzung maximal 8 Gew.-% Additive. Besonders bevorzugt sind maximal 6 Gew.-% in der Polymerzusammensetzung enthalten.

Eingesetzte Additive können ausgewählt werden aus der Gruppe: Pigmente, Nukleierungsmittel, Aufheller, Stabilisatoren, Tenside, Gleitmittel, Antioxidantien oder Kombinationen davon.

Die Polymerzusammensetzung kann zwischen 43 Gew.-% und 57 Gew.-% des Buten-Copolymers und zwischen 43 Gew.-% und 57 Gew.-% des weiteren Buten-Copolymers umfassen.

Die Polymerzusammensetzung umfasst speziell zwischen 8 Gew.-% und 16 Gew.-% des Buten-Copolymers, zwischen 55 Gew.-% und 65 Gew.-% des weiteren Buten-Copolymers und zwischen 18 Gew.-% und 30 Gew.-% des Homo-Polyethylens (insbesondere LDPE oder HDPE).

Bevorzugt umfasst die Polymerzusammensetzung zwischen 8 Gew.-% und 16 Gew.-% des Buten-Copolymers, zwischen 55 Gew.-% und 65 Gew.-% des weiteren Buten-Copolymers und zwischen 18 Gew.-% und 30 Gew.-% des random-Propylen-Copolymers.

Speziell umfasst die Polymerzusammensetzung zwischen 8 Gew.-% und 16 Gew.-% des Buten-Copolymers, zwischen 55 Gew.-% und 65 Gew.-% des weiteren Buten-Copolymers und zwischen 18 Gew.-% und 30 Gew.-% des Buten-Homopolymers.

Die Polymerzusammensetzung kann zwischen 8 Gew.-% und 16 Gew.-% des Buten-Copolymers, zwischen 55 Gew.-% und 65 Gew.-% des weiteren Buten-Copolymers, zwischen 3 Gew.-% und 12 Gew.-% des Homo-Polyethylens (insbesondere LDPE) und zwischen 10 Gew.-% und 22 Gew.-% des random-Propylen-Copolymers umfassen.

Der Gefäßverschluss kann, wie oben angesprochen, einen Träger und das Dichtungselement umfassen. Der Träger kann einen flächigen Abschnitt und einen Schürzenabschnitt umfassen. Speziell kann der Träger Metall, Kunststoff oder Metall und Kunststoff umfassen. Insbesondere ist der Hauptbestandteil des Trägers Metall oder Kunststoff, insbesondere Metall.

Der Gefäßverschluss kann ein Schraubverschluss sein. Bevorzugt ist der Gefäßverschluss ein Nockendrehverschluss. Der Gefäßverschluss kann auch ein Press-on Twist-off-Gefäßverschluss oder ein Composite-Verschluss sein.

Bevorzugt zeigt die Polymerzusammensetzung eine Sauerstoffdurchlässigkeitsrate von weniger als 500 cm³ m⁻² d⁻¹ bar⁻¹, bevorzugt von weniger als 400 cm³ m⁻² d⁻¹ bar⁻¹. Die Sauerstoffdurchlässigkeitsrate kann bestimmt werden nach DIN 53380. Durch eine geringe Sauerstoffdurchlässigkeitsrate der Polymerzusammensetzung ergibt sich ein geringer Eintritt von Sauerstoff in ein Gefäß, das mit einem der beschriebenen Gefäßverschlüsse verschlossen ist. Dadurch kann eine längere Haltbarkeit eines Füllguts in einem befüllten und verschlossenen Gefäß gewährleistet werden.

Die Gesamtmigration der Polymerzusammensetzung kann maximal 1,2 mg cm⁻², bevorzugt maximal 1,0 mg cm⁻², besonders bevorzugt maximal 0,8 mg cm⁻², sein, wobei die Gesamtmigration der Polymerzusammensetzung nach DIN-EN 1186-14 bestimmt werden kann.

Wird ein befülltes Gefäß durch einen Gefäßverschluss mit einem Dichtungselement aus der Polymerzusammensetzung verschlossen und bei einem Oberflächen-/Massenverhältnis von 1 cm⁻² Kontaktfläche des Dichtungselementes zu 0,02 kg Masse des Füllguts in dem Gefäß, wird ein Gesamtmigrationsgrenzwert von 60 mg kg⁻¹ eingehalten.

Es ist bevorzugt wenn das Dichtungselement des Gefäßverschlusses aus der Polymerzusammensetzung besteht, also beispielsweise das Dichtungselement keine zusätzliche aufgebrachte Folie umfasst.

Ein offenbarter Gefäßverschluss kann ein Gefäß verschließen. Das Gefäß umfasst eine Gefäßmündung und eine verschließbare Öffnung am Ende der Gefäßmündung. Diese Öffnung verschließt einer der offenbarten Gefäßverschlüsse.

Das Gefäß kann ein Glasgefäß, Kunststoffgefäß oder Metallgefäß sein. Insbesondere ist das Gefäß ein Glasgefäß.

Der Gefäßverschluss, der die Öffnung des Gefäßes verschließt, kann einen Träger und das Dichtungselement umfassen. Der Träger kann eine untere Seite aufweisen und die Gefäßmündung ein oberes Ende aufweisen. Das Dichtungselement des Gefäßverschlusses ist typischerweise zwischen die Gefäßmündung und dem Träger des Gefäßverschlusses eingeklemmt, so dass das Dichtungselement sowohl am oberen Ende der Gefäßmündung als auch an der unteren Seite des Trägers anliegt. Speziell ist die Höhe des Dichtungselements zwischen dem oberen Ende der Gefäßmündung und der unteren Seite des Trägers maximal 1,0 mm. Bevorzugt ist diese Höhe maximal 0,8 mm und besonders bevorzugt maximal 0,7 mm. Die Höhe kann in axialer Richtung des Gefäßes bestimmt werden.

Analog dazu kann die Höhe des Dichtungselements zwischen dem oberen Ende der Gefäßmündung und der unteren Seite des Trägers mindestens 0,2 mm betragen. Speziell beträgt die Höhe mindestens 0,4 mm und besonders bevorzugt mindestens 0,5 mm. Die Messung der Höhe des Dichtungselements kann in axialer Richtung des Gefäßes erfolgen.

Besonders bevorzugt liegt die Höhe des Dichtungselements zwischen dem oberen Ende der Gefäßmündung und der unteren Seite des Trägers zwischen 0,3 mm und 0,9 mm.

Beträgt beispielsweise die Höhe des Dichtungselements vor dem Aufbringen des Gefäßverschlusses auf ein Gefäß 1,2 mm, sorgt ein Eindruck des oberen Endes der Gefäßmündung in das Dichtungselement (Höhe zwischen oberen Ende der Gefäßmündung und unterer Seite des Trägers von maximal 1,0 mm) ohne dass das Dichtungselement durchschnitten wird (Höhe des Dichtungselements zwischen oberen Ende der Gefäßmündung und unterer Seite des Trägers von mindestens 0,2 mm) für eine hohe Dichtigkeit des mit dem Gefäßverschlusses verschlossenen Gefäßes.

Bevorzugt herrscht in dem geschlossenen Gefäß ein Vakuum. Der absolute Druck in dem geschlossenen Gefäß kann maximal 200 hPa betragen. Speziell beträgt der absolute Druck in dem verschlossenen Gefäß maximal 100 hPa.

Das mit dem Gefäßverschluss verschlossene Gefäß kann ein Sicherheitsmaß von maximal 10 mm aufweisen, speziell ist das Sicherheitsmaß maximal 8 mm. Bevorzugt beträgt das Sicherheitsmaß maximal 6 mm. Am meisten bevorzugt beträgt das Sicherheitsmaß maximal 4 mm.

Zur Bestimmung des Sicherheitsmaßes wird ein mit einem Nockendrehverschluss verschlossenes Gefäß bei Raumtemperatur (23°C) für einen Zeitraum von 30 Minuten gelagert. Die relative Position des Gefäßverschlusses zu dem Gefäß wird durch Anbringen einer Markierung auf der Gefäßverschlussschürze und der Gefäßwand so markiert, dass die umfängliche Distanz zwischen der Markierung auf der Gefäßverschlussschürze und der Gefäßwand null ist. Die Markierungen liegen auf einer Geraden, die parallel zur Längsachse des Gefäßes ist. Anschließend wird der Gefäßverschluss vollständig von dem Gefäß durch Abschrauben entfernt. Nachfolgend wird der Gefäßverschluss auf das Gefäß aufgelegt und angedreht, bis ein leichter Widerstand spürbar ist. Der Gefäßverschluss wird also fingerfest angedreht. Anschließend wird die umfängliche Distanz zwischen der Markierung auf der Gefäßverschlussschürze und der Markierung auf der Gefäßwand gemessen. Die gemessene Distanz entspricht dem Sicherheitsmaß ausgedrückt in mm.

Durch die zumindest abschnittsweise starke Steigung der Gewindegänge von Gefäßen und Nockendrehverschlüssen, ist die Präzision der Messung des Sicherheitsmaßes hoch, da der Punkt, an dem ein leichter Widerstand während des Andrehens des Gefäßverschlusses spürbar ist (fingerfest), präzise bestimmbar ist. Typischerweise liegt die Präzision der Messung des Sicherheitsmaßes an verschlossenen Gefäßen, die unter gleichen Bedingungen verschlossen wurden, durch verschiedene Personen bei etwa ±1 mm.

Durch ein passendes Sicherheitsmaß wird sichergestellt, dass das Dichtungselement eine elastische Kraft auf zumindest das obere Ende der Gefäßmündung ausübt, wenn das Gefäß mit dem Gefäßverschluss verschlossen ist. Dadurch ergibt sich eine hohe Dichtigkeit des Innenraums des verschlossenen Gefäßes.

Ein verschlossenes und befülltes Gefäß kann hergestellt werden, indem ein Gefäß mit einer Gefäßmündung und einer verschließbaren Öffnung am Ende der Gefäßmündung bereitgestellt wird. Das Gefäß wird mit einem (festen und/oder flüssigen) Lebensmittel durch die Öffnung des Gefäßes befüllt und die Öffnung des Gefäßes mit einem offenbarten Gefäßverschluss verschlossen.

Die Öffnung des Gefäßes kann einen Durchmesser von mindestens 20 mm aufweisen. Insbesondere ist der Durchmesser der Öffnung des Gefäßes maximal 120 mm.

Das Gefäß kann ein Glasgefäß, Kunststoffgefäß oder Metallgefäß sein.

Der Gefäßverschluss kann, bevor die Öffnung des Gefäßes mit dem Gefäßverschluss verschlossen wird, bei einer Temperatur von mindestens 90 °C behandelt werden. Eine solche Behandlung kann beispielsweise mit Wasserdampf durchgeführt werden.

In dem Gefäß kann ein Kopfraum gebildet werden, nachdem das Gefäß mit dem Lebensmittel befüllt wurde. Der Kopfraum in dem Gefäß ist nach der Befüllung der Abschnitt des Gefäßinhalts, in dem kein Lebensmittel vorhanden ist. Dem Kopfraum kann Dampf zugeführt werden, bevor der Gefäßverschluss auf das Gefäß aufgebracht wird und damit die Öffnung des Gefäßes verschlossen wird. Insbesondere kann der Dampf Wasserdampf sein.

Der absolute Druck in dem verschlossenen und befüllten Gefäß kann maximal 200 hPa betragen. Speziell kann der Druck in dem verschlossenen und befüllten Gefäß maximal 100 hPa betragen.

Zur Bildung eines Eindrucks der Gefäßmündung in das Dichtungselement kann das Dichtungselement während des Verschließens der Öffnung des Gefäßes mit dem Gefäßverschluss und/oder einer thermischen Behandlung des verschlossenen und befüllten Gefäßes mindestens 0,2 mm in axialer Richtung des Gefäßes verformt werden. Bevorzugt beträgt diese Verformung des Dichtungselements mindestens 0,4 mm. Speziell beträgt die Verformung mindestens 0,5 mm.

Analog dazu kann das Dichtungselement zur Bildung eines Eindrucks der Gefäßmündung in das Dichtungselement während des Verschließens der Öffnung des Gefäßes mit dem Gefäßverschluss und/oder einer thermischen Behandlung des verschlossenen und befüllten Gefäßes um maximal 1,0 mm verformt werden. Insbesondere beträgt die Verformung maximal 0,8 mm. Bevorzugter beträgt die Verformung maximal 0,7 mm. Dies jeweils in axialer Richtung des Gefäßes.

Besonders bevorzugt beträgt die Verformung des Dichtungselements zwischen 0,3 mm und 0,9 mm.

Das Lebensmittel kann aseptisch in das Gefäß eingefüllt werden.

Das Lebensmittel kann auch mit einer Temperatur von maximal 10 °C in das Gefäß gefüllt werden.

Das Lebensmittel kann auch mit einer Temperatur zwischen 10 °C und 70 °C in das Gefäß gefüllt werden.

Ebenso kann das Lebensmittel mit einer Temperatur zwischen 70 °C und 98 °C in das Gefäß gefüllt werden.

Innerhalb des Verfahrens kann das verschlossene und befüllte Gefäß thermisch behandelt werden. Dabei liegt die Temperatur der thermischen Behandlung oberhalb der Temperatur des (festen und/oder flüssigen) Lebensmittels während der Befüllung des Gefäßes damit.

Die thermische Behandlung kann bei einer Temperatur von mindestens 60°C erfolgen.

Auch kann die thermische Behandlung bei einer Temperatur von maximal 135°C erfolgen (zwischen 60 °C und 135 °C). Insbesondere erfolgt die thermische Behandlung bei einer Temperatur von bis zu 135°C (zwischen 60 °C und 135 °C) bei einem absoluten Umgebungsdruck von maximal 4,0 bar, bevorzugt bei einem absoluten Umgebungsdruck zwischen 1,0 bar und 4,0 bar.

Bevorzugt ist der Druck in dem verschlossenen Gefäß während einer thermischen Behandlung geringer als der Druck außerhalb des verschlossenen Gefäßes.

Die Ausführungsformen der Erfindung sind anhand von einem Beispiel dargestellt und nicht auf eine Weise, in der Beschränkungen aus den Figuren in die Patentansprüche übertragen oder hineingelesen werden. Gleiche Bezugszeichen in den Figuren geben gleiche Elemente an.
- Figur 1: zeigt eine Seitenansicht eines Nockendrehverschlusses 1 mit einem ringförmigen Dichtungselement 3, teilweise als Schnitt;
- Figur 2: zeigt eine Seitenansicht des Nockendrehverschlusses 1 mit dem Dichtungselement 3 auf einem Gefäß 5, teilweise als Schnitt;
- Figur 3: zeigt den Nockendrehverschluss 1 mit dem Dichtungselement 3 in einer Untersicht;
- Figur 4: zeigt eine isometrische Ansicht eines Composite-Verschlusses 61 (Combi-Twist);
- Figur 5: zeigt teilweise einen axialen Schnitt des Composite-Verschlusses 61 (Combi-Twist) von Figur 4;
- Figur 6: zeigt eine Seitenansicht eines Press-on Twist-off-Verschlusses 21 (PT-Verschluss) mit einem Dichtungselement 23, teilweise als Schnitt;
- Figur 7: zeigt eine Seitenansicht des PT-Verschlusses 21 mit dem Dichtungselement 23 auf einem Gefäß 25, teilweise als Schnitt;
- Figur 8: zeigt eine Draufsicht des PT-Verschlusses 21;
- Figur 9: zeigt eine Seitenansicht eines Composite-Verschlusses 41 (Band-Guard) mit einem Dichtungselement 43, teilweise als Schnitt;
- Figur 10: zeigt eine Seitenansicht des Composite-Verschlusses 41 (Band-Guard) mit dem Dichtungselement 43 auf einem Gefäß 45, teilweise als Schnitt;
- Figur 11: zeigt eine Draufsicht des Composite-Verschlusses 41 (Band-Guard);
- Figur 12: zeigt einen vergrößerten Ausschnitt des Nockendrehverschlusses von Figur 2.

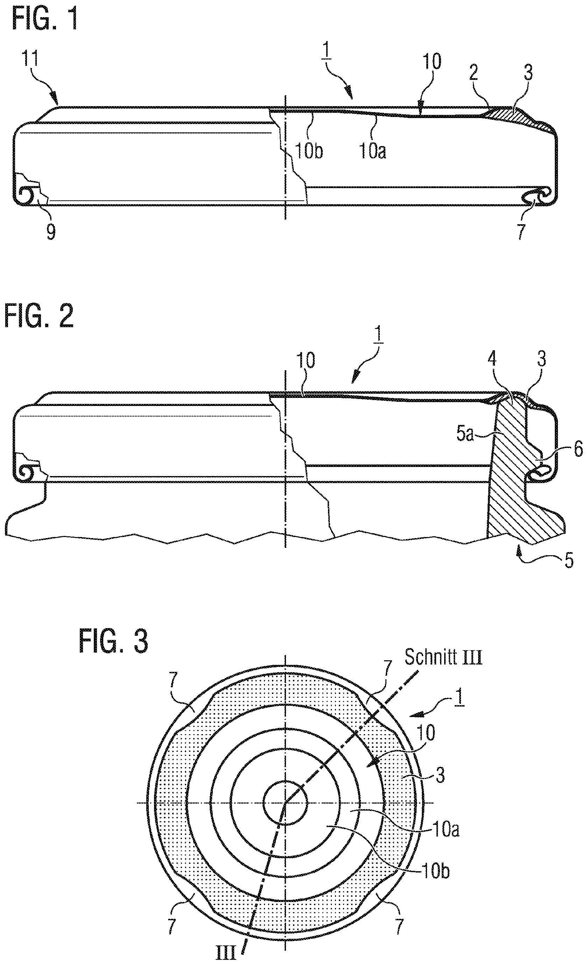

Die Figuren 1 und 3 zeigen einen Nockendrehverschluss 1. Der Nockendrehverschluss 1 umfasst einen metallischen Träger 11 und ein Dichtungselement 3. In der Darstellung der Figur 2 ist der Nockendrehverschluss 1 auf ein Gefäß 5 aufgebracht. An dem unteren Ende des Nockendrehverschlusses 1 ist eine Einrollung 9 ausgebildet. Mehrere Nocken 7 sind umfänglich verteilt aus der Einrollung 9 ausgebildet. Nocken 7 sind durch eine axiale Verformung der Einrollung 9 geformt und erstrecken sich radial weiter zur Mitte des Nockendrehverschlusses 1 als die Einrollung 9. Der in den Figuren 1 bis 3 abgebildete Nockendrehverschluss 1 umfasst vier Nocken 7, die umfänglich gleichmäßig verteilt ausgebildet sind. Die Schnitte, die in den Figuren 1 und 2 teilweise abgebildet sind, entsprechen dem Schnitt III-III in Figur 3.

Nahe dem radial äußeren Endabschnitt des Nockendrehverschlusses 1 ist ein Kanal 2 in dem oberen Abschnitt 10 des Trägers 11 ausgebildet. Das Dichtungselement 3 ist zumindest teilweise in dem Kanal 2 angeordnet. In dieser Ausführungsform ist das Dichtungselement 3 ringförmig ausgestaltet, in anderen Ausführungsformen kann das Dichtungselement 3 scheibenförmig ausgestaltet sein, dies insbesondere wenn der Durchmesser des Nockendrehverschlusses klein (z.B. maximal 30 mm) ist.

Zur Haftvermittlung zwischen dem metallischen Träger 11 und dem Dichtungselement 3 ist typischerweise ein Haftlack auf die Seite des metallischen Trägers 11 aufgebracht, die mit dem Dichtungselement 3 in Kontakt steht.

In Figur 2 ist der Nockendrehverschluss 1 auf ein Gefäß 5 aufgebracht. Das Gefäß 5 umfasst eine Gefäßmündung 5a als oberen Abschnitt des Gefäßes 5. Die Gefäßmündung umfasst ein Gewinde 6 und ein oberes Ende 4 der Gefäßmündung 5a. Das Gewinde 6 ist umlaufend im Bereich der Gefäßmündung 5a ausgebildet und erstreckt sich umlaufend aufwärts oder abwärts (in Abhängigkeit des Blickwinkels).

Zum Aufbringen des Nockendrehverschlusses 1 auf ein Gefäß 5 werden Nocken 7 mit Abschnitten des Gewindes 6 in Kontakt gebracht und der Nockendrehverschluss 1 im Uhrzeigersinn relativ zum Gefäß 5 gedreht. Durch die Ausgestaltung des Gewindes 6 und die Interaktion der Nocken 7 mit dem Gewinde 6 bewegt sich das obere Ende 4 der Gefäßmündung 5a in Richtung des Dichtungselements 3 während der Drehbewegung des Nockendrehverschlusses 1 relativ zu dem Gefäß 5. Durch eine weitere Drehbewegung des Nockendrehverschlusses 1 drückt das obere Ende 4 der Gefäßmündung 5a in das Dichtungselement 3 ein und verformt dieses, sodass ein Abschnitt des oberen Endes 4 der Gefäßmündung 5a von dem Dichtungselement 3 bedeckt ist, wodurch das Gefäß 5 dicht verschlossen ist. Ein dichter Verschluss des Gefäßes 5 ist insbesondere notwendig, um einem erhöhten Druck während einer thermischen Behandlung des verschlossenen Gefäßes 5 bei Temperaturen oberhalb von 70 °C, 90 °C oder sogar oberhalb von 120 °C Stand zu halten.

Der Nockendrehverschluss 1, wie in den Figuren 1 bis 3 abgebildet, umfasst einen Safety Button 10b, der in dem oberen Abschnitt 10 des Trägers 11 ausgebildet ist. Aufgrund der Steigung 10a in dem oberen Abschnitt 10 des Trägers 11 klappt der Safety Button 10b in Richtung der Mitte des Gefäßes, wenn ein ausreichend großer Unterdruck in dem Gefäß vorliegt. Ein solches Vakuum kann durch das Einbringen von Wasserdampf in das Gefäß vor dem Verschließen des Gefäßes mit dem Verschluss erzeugt werden.

Öffnet ein Verbraucher das Gefäß, indem der Gefäßverschluss entfernt wird, steigt der Druck in dem Gefäß auf Umgebungsdruck und der Safety Button 10b klappt von der Mitte des Gefäßes weg. Das Umklappen des Safety Buttons 10b wird von einem charakteristischen Geräusch begleitet, durch das ein Verbraucher erkennen kann, dass vor dem Öffnen des Gefäßes ein Vakuum in dem Gefäß geherrscht hat.

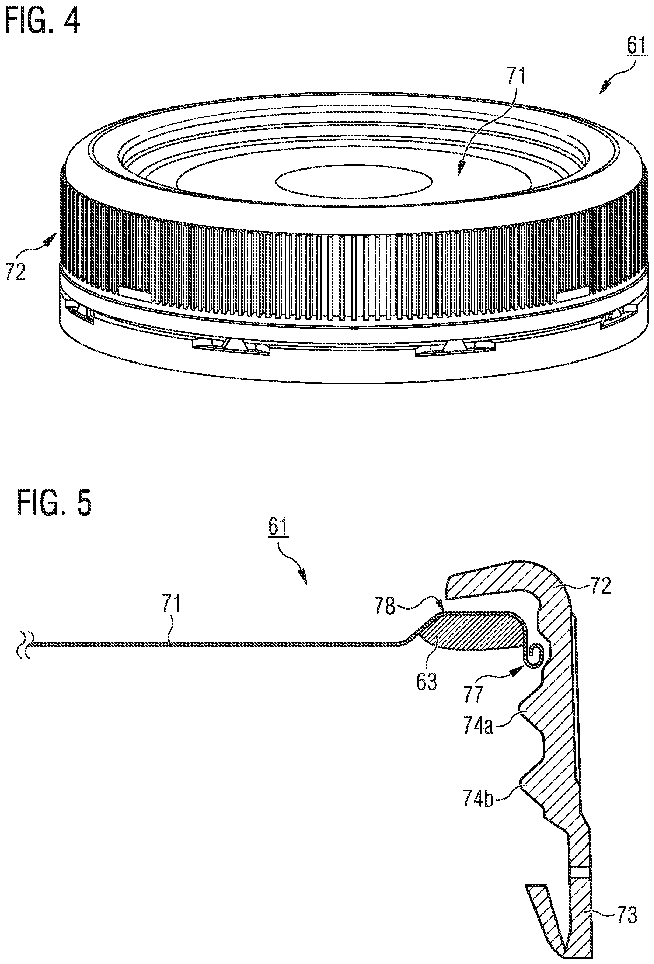

Die Figuren 4 und 5 zeigen einen Composite-Verschluss 61 (Combi-Twist), der analog zu dem beschriebenen Nockendrehverschluss 1 durch eine Drehbewegung auf ein Gefäß aufgebracht werden kann und durch eine Drehbewegung von dem Gefäß entfernt werden kann.

Der Composite-Verschluss 61 umfasst einen Träger mit einem oberen metallischen Abschnitt 71 und einem Kunststoff-Abschnitt 72, der L-förmig geformt ist. Nahe dem radialen Ende des metallischen Abschnitts 71 des Trägers ist ein Kanal 78 geformt und eine Rollung 77 ist am radialen Ende des metallischen Abschnitts 71 ausgebildet. Ein Dichtungselement ist zumindest teilweise in dem Kanal 78 angeordnet.

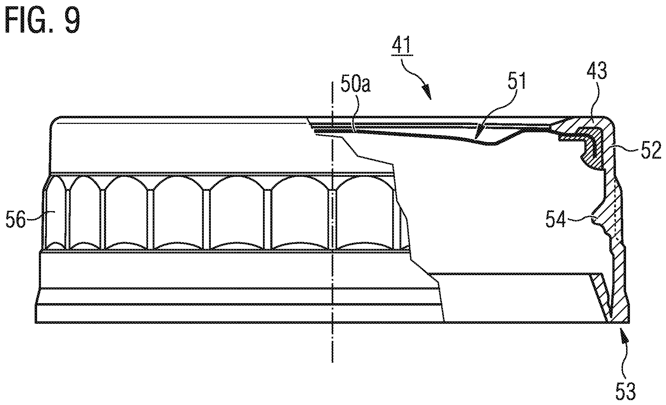

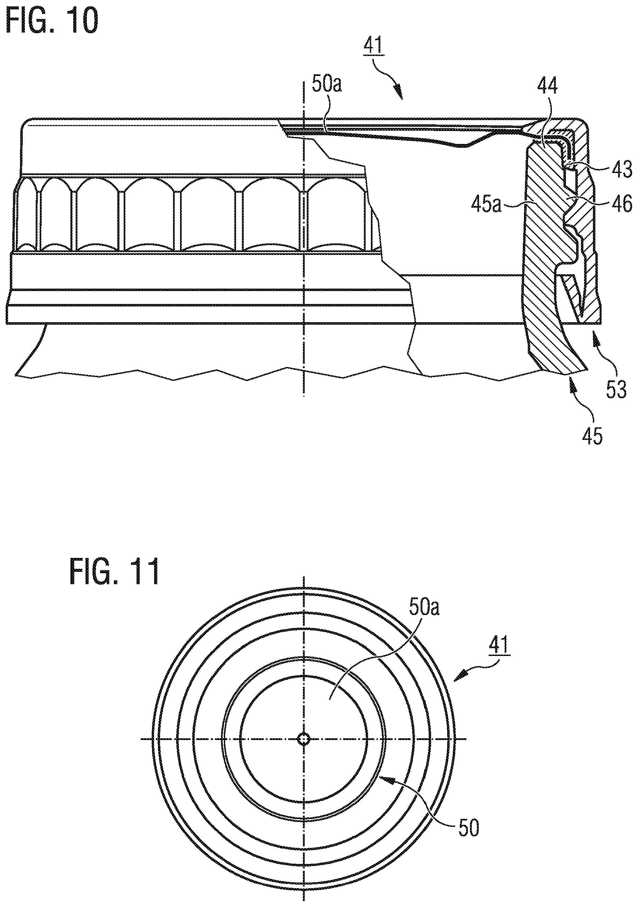

Mehrere, auf der Innenseite des Kunststoff-Abschnitts 72 gebildete Gewindeelemente 74a, 74b kontaktieren mit einem Gegengewinde im Bereich der Mündung eines Gefäßes (nicht dargestellt), auf das der Composite-Verschluss 61 aufgebracht werden soll. Der Kunststoff-Abschnitt 72 des Composite-Verschlusses 61 umfasst weiterhin eine Originalitätssicherung 73, die ähnlich der Originalitätssicherung wie in den Figuren 9 bis 11 ausgestaltet ist und mit Blick auf die Figuren 9 bis 11 näher beschrieben wird.

Wird der Composite-Verschluss 61 auf ein Gefäß durch eine Drehbewegung aufgeschraubt, ergibt sich eine analoge Interaktion der Gefäßmündung des Gefäßes mit dem Dichtungselement des Composite-Verschlusses 61 wie anhand des Nockendrehverschlusses 1 beschrieben.

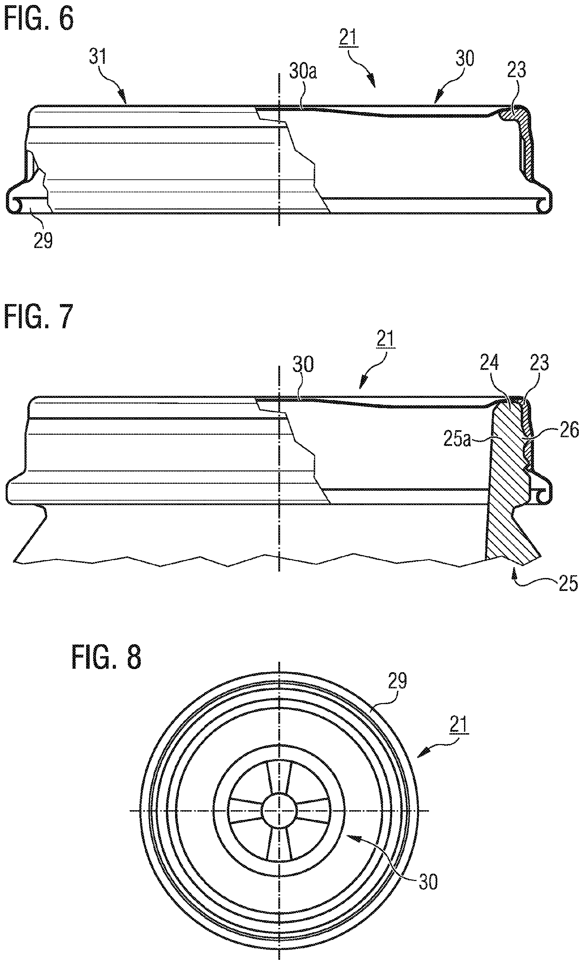

In den Figuren 6 bis 8 ist ein Press-on Twist-Off-Verschluss 21 (PT-Verschluss) abgebildet. Der PT-Verschluss 21 umfasst einen metallischen Träger 31 mit einer Einrollung 29 am unteren Ende des Trägers 31 und einem Safety Button 30a in dem oberen Abschnitt 30 des Trägers 31.

Ein Dichtungselement 23 ist sowohl im Bereich des oberen Abschnitts 30 des Trägers 31 als auch in erheblichem Umfang auf der Schürze des Trägers, die sich ausgehend von dem oberen Abschnitt 30 des Trägers 31 nach unten erstreckt, ausgebildet. Der PT-Verschluss 21 wird im Gegensatz zu dem Nockendrehverschluss 1 und dem Composite-Verschluss 61 bei einem Aufbringen auf ein Gefäß 25, auf die Gefäßmündung 25a aufgepresst. Während des Aufpressens auf die Gefäßmündung 25a ist das Dichtungselement 23 ausreichend weich, um Gewindeelemente 26 der Gefäßmündung 25a elastisch zu umschließen. Typischerweise wird hierfür das Dichtungselement 23 vor dem Aufbringen des PT-Verschlusses 21 auf ein Gefäß 5 mit Wasserdampf behandelt, um die nötige Weichheit des Dichtungselements 23 zu verursachen. Nach Abkühlung des Dichtungselements 23 ist ein Gegengewinde in Form eines Negativs der Gewindeelemente 26 der Gefäßmündung in dem Dichtungselement 23 gebildet.

Ein oberes Ende 24 der Gefäßmündung 25a kontaktiert das Dichtungselement 23.

Zum Öffnen des Gefäßes 25, wird der PT-Verschluss 21 durch eine Drehbewegung von dem Gefäß 25 entfernt.

Figuren 9 bis 11 zeigen einen Composite-Verschluss 41 (Band-Guard), der analog zu dem beschriebenen PT-Verschluss 21 funktionsfähig ist.

Der Composite-Verschluss 41 umfasst einen Träger mit einem metallischen Abschnitt 51 und einem Kunststoff-Abschnitt 52, eine Originalitätssicherung 53 und einen Safety Button 50a. Die Originalitätssicherung 53 ist so ausgestaltet, dass diese von dem übrigen Composite-Verschluss 41 entfernt wird, wenn der Composite-Verschluss 41 von einem Gefäß 45 entfernt wird, und dient der Überprüfbarkeit eines Verbrauchers, ob der Composite-Verschluss 41 bereits von dem Gefäß 45 entfernt wurde. Der Safety Button 50a ist analog zu dem Safety Button 10b des Nockendrehverschlusses 1 ausgestaltet und funktionsfähig.

Der Kunststoff-Abschnitt des Composite-Verschluss 41 kann mehrere axial verlaufende Einbuchtungen 56 umfassen, um die Stabilität des Verschlusses zu erhöhen.

Ein Dichtungselement 43 ist so in dem Composite-Verschluss 41 angeordnet, dass dieses sowohl den metallischen Abschnitt 51 als auch den Kunststoff-Abschnitt 52 kontaktiert. Zum Verschließen eines Gefäßes 45 wird der Composite-Verschluss 41 auf die Gefäßmündung 45a des Gefäßes 45 aufgepresst, sodass zumindest das obere Ende 44 der Gefäßmündung 45a das Dichtungselement 43 kontaktiert.

Der Kunststoff-Abschnitt 52 des Trägers umfasst mehrere versetzte Vorsprünge 54, die mit Gewindeelementen 46 der Gefäßmündung 45a interagieren. Zum Öffnen eines Gefäßes 45, das mit dem Composite-Verschluss 41 verschlossen ist, kann der Composite-Verschluss 41 relativ zu dem Gefäß 45 verdreht werden.

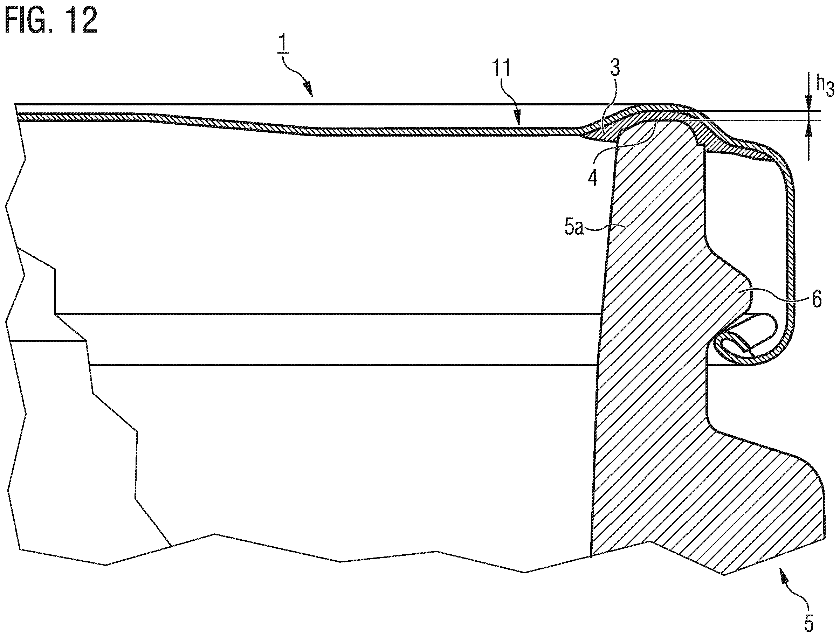

Der Abstand h₃ eines Dichtungselements 3 zwischen einem oberen Ende 4 einer Gefäßmündung 5a eines Gefäßes 5 und der unteren Seite eines Trägers 11 des Verschlusses 1 ist in Figur 12 mit Blick auf einen Nockendrehverschluss 1 dargestellt und hier beschrieben. Analog ist der Abstand (Höhe) h₃ für andere Verschluss-Typen zu bestimmen.

Das zwischen der Gefäßmündung 5 und dem Träger 11 des Gefäßverschlusses 1 eingeklemmte Dichtungselement 3 besitzt eine Höhe h₃, die gegeben ist, wenn ein Gefäß 5 mit dem Verschluss 1 verschlossen ist. Ist die Höhe h₃ zu gering droht eine Durchschneidung des Dichtungselements 3, wodurch die Dichtigkeit des verschlossenen Gefäßes 5 beeinträchtigt sein kann. Ist die Höhe h₃ zu groß, ist die Dichtigkeit des verschlossenen Gefäßes beeinträchtigt, da die Kontaktfläche zwischen dem oberen Ende 4 der Gefäßmündung 5a und dem Dichtungselement 3 nicht ausreichend groß ist. Um einen passenden Eindruck des oberen Endes 4 der Gefäßmündung 5a in das Dichtungselement zu erreichen, ist die Zusammensetzung des Dichtungselements 3 maßgebend.

### Beispiele:

Beispiele von Polymerzusammensetzungen für Dichtungselemente in einem Gefäßverschluss sind in den Tabellen 1 und 2 dargestellt.

**Tabelle 1**

| | **Beispiel 1** | **Beispiel 2** | **Beispiel 3** | **Beispiel 4** |
|---|---|---|---|---|
| **Komponente** | | | | |
| Buten-Propylen-Copolymer, Gew.-% | 94,9 | 47,5 | 12,0 | 12,0 |
| Buten-Ethylen-Copolymer, Gew.-% | | 47,4 | 59,9 | 59,9 |
| LDPE, Gew.-% | | | 23,0 | |
| HDPE, Gew.-% | | | | 23,0 |
| random-Propylen-Ethylen-Copolymer, Gew.-% | | | | |
| Homo-Polybuten, Gew.-% | | | | |
| Additive, Gew.-% | 5,1 | 5,1 | 5,1 | 5,1 |

| **Eigenschaften** | | | | |
|---|---|---|---|---|
| Reibungskoeffizient, dimensionslos | 0,32 | 0,26 | 0,23 | 0,17 |
| Gesamtmigration, mg cm⁻² | 0,56 | 0,79 | 0,88 | 0,83 |
| Sauerstoffdurchlässigkeitsrate, cm³ m⁻² d⁻¹ bar⁻¹ | 370 | 364 | 409 | 307 |

**Tabelle 2**

| | **Beispiel 5** | **Beispiel 6** | **Beispiel 7** |
|---|---|---|---|
| **Komponente** | | | |
| Buten-Propylen-Copolymer, Gew.-% | 12,0 | 12,0 | 12,0 |
| Buten-Ethylen-Copolymer, Gew.-% | 59,9 | 59,9 | 59,9 |
| LDPE, Gew.-% | | | 7,0 |
| HDPE, Gew.-% | | | |
| random-Propylen-Ethylen-Copolymer, Gew.-% | 23,0 | | 16,0 |
| Homo-Polybuten, Gew.-% | | 23,0 | |
| Additive, Gew.-% | 5,1 | 5,1 | 5,1 |

| **Eigenschaften** | | | |
|---|---|---|---|
| Reibungskoeffizient, dimensionslos | 0,19 | 0,20 | 0,17 |
| Gesamtmigration, mg cm⁻² | 1,05 | 0,81 | 0,96 |
| Sauerstoffdurchlässigkeitsrate, cm³ m⁻² d⁻¹ bar⁻¹ | 413 | 325 | 368 |

Das Buten-Propylen-Copolymer besitzt eine Schmelztemperatur von 114 °C, bestimmt nach ISO 11357-3.

Ein typischer Wert der Sauerstoffdurchlässigkeitsrate von PVC-haltigen Zusammensetzungen, die als Dichtungselement in Gefäßverschlüssen eingesetzt werden, liegt bei etwa 220 cm³ m⁻² d⁻¹ bar⁻¹.

Die Sauerstoffdurchlässigkeitsraten von bekannten, kommerziell erhältlichen PVC-freien Zusammensetzungen in Gefäßverschlüssen betragen typischerweise 650 cm³ m⁻² d⁻¹ bar⁻¹ und mehr. Diesen bekannten Zusammensetzungen werden oft Sauerstoff-Scavenger beigefügt, um das Vorhandensein von Sauerstoff in einem Gefäß, das mit einem solchen Gefäßverschluss verschlossen ist, zu reduzieren.

Die hierin offenbarten PVC-freien Polymerzusammensetzungen zeigen Sauerstoffdurchlässigkeitsraten, die nahe an den Raten von PVC-haltigen Zusammensetzungen liegen. Die Sauerstoffdurchlässigkeitsraten der hierin offenbarten Zusammensetzung liegen deutlich unterhalb der Sauerstoffdurchlässigkeitsraten von bekannten PVC-freien Zusammensetzungen.

Durch eine Polymerzusammensetzung mit einer niedrigen Sauerstoffdurchlässigkeitsrate lässt sich der Einsatz von Sauerstoff-Scavenger-Materialien in der Polymerzusammensetzung vermeiden und gleichzeitig wird ein geringer Eintritt von Sauerstoff in das befüllte Gefäß gewährleistet.

Das Buten-Propylen-Copolymer ist beispielsweise von LyondellBasell erhältlich.

Das eingesetzte Buten-Ethylen-Copolymer ist beispielsweise von LyondellBasell erhältlich. Der copolymerisierte Buten-Anteil kann bei mindestens 80 mol.-% liegen.

LDPE und HDPE sind von diversen Anbietern kommerziell erhältlich.

Das random-Propylen-Ethylen-Copolymer kann von Borealis bezogen werden.

Homo-Polybuten ist erhältlich von LyondellBasell.

SEBS ist von Kraton erhältlich, beispielsweise aus der Kraton G-Serie.

## Patentansprüche

1. **Gefäßverschluss** (1, 21, 41, 61) mit einem Dichtungselement (3, 23, 43, 63), wobei
(a) das Dichtungselement (3, 23, 43, 63) eine Polymerzusammensetzung umfasst; und
(b) die Polymerzusammensetzung ein Buten-Copolymer umfasst, wobei das Buten-Copolymer eine Schmelztemperatur Tₘ zwischen 30 °C und 130 °C aufweist, wobei die Schmelztemperatur Tₘ durch die zweite Aufheizkurve einer DSC-Messung bei einer Heizrate von 10 °C min⁻¹ bestimmt wird.

2. Gefäßverschluss nach Anspruch 1, wobei die Schmelztemperatur Tₘ des Buten-Copolymers zwischen 40 °C und 125 °C, insbesondere zwischen 80 °C und 125 °C, liegt; und/oder
wobei Propylen ein Comonomer des Buten-Copolymers ist; und/oder
wobei das Buten-Copolymer zwischen 0,1 Gew.-% und 80 Gew.-%, bevorzugt zwischen 5 Gew.-% und 60 Gew.-%, besonders bevorzugt zwischen 8 Gew.-% und 55 Gew.-%, in der Polymerzusammensetzung enthalten ist.

3. Gefäßverschluss nach einem der Ansprüche 1 oder 2, wobei die Polymerzusammensetzung ein weiteres Buten-Copolymer umfasst, wobei die Buten-Copolymere unterschiedliche Polymerarten sind,
insbesondere wobei ein Comonomer des weiteren Buten-Copolymers Ethylen ist; und/oder
wobei das weitere Buten-Copolymer ein Buten-Bipolymer ist; und/oder
wobei das weiteren Buten-Copolymer zwischen 10 Gew.-% und 80 Gew.-%, bevorzugt zwischen 22 Gew.-% und 70 Gew.-%, besonders bevorzugt zwischen 40 Gew.-% und 65 Gew.-%, in der Polymerzusammensetzung enthalten ist.

4. Gefäßverschluss nach einem der Ansprüche 1 bis 3, wobei die Polymerzusammensetzung ein Polyethylen umfasst,
bevorzugt wobei das Polyethylen ein Homo-Polyethylen, insbesondere ein LDPE oder ein HDPE, ist; und/oder
wobei das Polyethylen zwischen 5 Gew.-% und 60 Gew.-%, bevorzugt zwischen 10 Gew.-% und 45 Gew.-%, besonders bevorzugt zwischen 15 Gew.-% und 35 Gew.-%, in der Polymerzusammensetzung enthalten ist.

5. Gefäßverschluss nach einem der Ansprüche 1 bis 3, wobei die Polymerzusammensetzung ein random-Propylen-Copolymer umfasst,
insbesondere wobei Ethylen ein Comonomer des random-Propylen-Copolymers ist; und/oder
wobei das random-Propylen-Copolymer ein Bipolymer ist; und/oder
wobei das random-Propylen-Copolymer zwischen 5 Gew.-% und 60 Gew.-%, bevorzugt zwischen 10 Gew.-% und 45 Gew.-%, besonders bevorzugt zwischen 15 Gew.-% und 35 Gew.-%, in der Polymerzusammensetzung enthalten ist.

6. Gefäßverschluss nach einem der Ansprüche 1 bis 3, wobei die Polymerzusammensetzung ein Buten-Homopolymer umfasst,
insbesondere wobei das Buten-Homopolymer zwischen 5 Gew.-% und 60 Gew.-%, bevorzugt zwischen 10 Gew.-% und 45 Gew.-%, besonders bevorzugt zwischen 15 Gew.-% und 35 Gew.-%, in der Polymerzusammensetzung enthalten ist.

7. Gefäßverschluss nach einem der Ansprüche 1 oder 2, wobei die Polymerzusammensetzung ein Copolymer enthält, das Styrol als ein Comonomer umfasst,
bevorzugt wobei das Copolymer, das Styrol als ein Comonomer umfasst, ein SBS, SEPS, SEEPS oder SEBS ist, insbesondere ein SEBS ist; und/oder
wobei das Copolymer, das Styrol als ein Comonomer umfasst, zwischen 10 Gew.-% und 70 Gew.-%, bevorzugt zwischen 20 Gew.-% und 60 Gew.-%, besonders bevorzugt zwischen 35 Gew.-% und 55 Gew.-%, in der Polymerzusammensetzung enthalten ist.

8. Gefäßverschluss nach Anspruch 7, wobei die Polymerzusammensetzung ein Buten-Homopolymer umfasst,
insbesondere wobei das Buten-Homopolymer zwischen 5 Gew.-% und 60 Gew.-%, bevorzugt zwischen 10 Gew.-% und 45 Gew.-%, besonders bevorzugt zwischen 15 Gew.-% und 35 Gew.-%, in der Polymerzusammensetzung enthalten ist.

9. Gefäßverschluss nach einem der Ansprüche 1 oder 2, wobei das Buten-Copolymer zu mindestens 80 Gew.-%, bevorzugt mindestens 90 Gew.-%, in der Polymerzusammensetzung enthalten ist.

10. Gefäßverschluss nach einem der vorhergehenden Ansprüche, wobei die Polymerzusammensetzung maximal 10 Gew.-% Homo-Polypropylen, bevorzugt kein Homo-Polypropylen, umfasst.

11. Gefäßverschluss nach einem der vorhergehenden Ansprüche, wobei die Polymerzusammensetzung maximal 10 Gew.-%, bevorzugt maximal 5 Gew.-%, einer bei 20 °C und 1000 hPa flüssigen Komponente umfasst, besonders bevorzugt die Polymerzusammensetzung keine bei 20 °C und 1000 hPa flüssige Komponente umfasst.

12. Gefäßverschluss nach einem der vorhergehenden Ansprüche, wobei die Polymerzusammensetzung einen statischen Reibungskoeffizienten, bestimmt nach DIN EN ISO 8295, von maximal 0,50, bevorzugt von maximal 0,40, aufweist; und/oder
wobei die Polymerzusammensetzung eine Sauerstoffdurchlässigkeitsrate, bestimmt nach DIN 53380, von weniger als 500 cm³ m⁻² d⁻¹ bar⁻¹, bevorzugt von weniger als 400 cm³ m⁻² d⁻¹ bar⁻¹, aufweist; und/oder
wobei die Polymerzusammensetzung eine Gesamtmigration, bestimmt nach DIN-EN 1186-14, von maximal 1,20 mg cm⁻², bevorzugt von maximal 1,0 mg cm⁻², besonders bevorzugt von maximal 0,8 mg cm⁻², aufweist.

13. Gefäßverschluss nach einem der vorhergehenden Ansprüche, wobei der Gefäßverschluss (1, 21, 41, 61) ein Schraubverschluss, insbesondere ein Nockendrehverschluss (1), ein Press-on-Twist-off-Verschluss (21) oder ein Composite-Verschluss (41, 61) ist.

14. **Gefäß** (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der Ansprüche 1 bis 13 verschlossen ist.

15. **Verfahren zur Herstellung** eines verschlossenen und befüllten Gefäßes, mit den Schritten:
(a) Bereitstellen eines Gefäßes (1, 21, 41, 61) mit einer Gefäßmündung (5a, 25a, 45a) und einer verschließbaren Öffnung am Ende der Gefäßmündung;
(b) Befüllen des Gefäßes mit einem Lebensmittel durch die Öffnung des Gefäßes;
(c) Verschließen der Öffnung des Gefäßes mit einem Gefäßverschluss nach einem der Ansprüche 1 bis 13.

## Claims

1. A closure (1, 21, 41, 61) having a sealing element (3, 23, 43, 63), wherein
(a) the sealing element (3, 23, 43, 63) comprises a polymer composition; and
(b) the polymer composition comprises a butene copolymer, wherein the butene copolymer has a melting temperature Tₘ of between 30 °C and 130 °C, wherein the melting temperature Tₘ is determined by the second heating curve of a DSC-measurement at a heating rate of 10 °C min⁻¹.

2. The closure according to claim 1, wherein the melting temperature Tₘ of the butene copolymer lies between 40 °C and 125 °C, particularly between 80 °C and 125 °C; and/or
wherein propylene is a comonomer of the butene copolymer; and/or
wherein the butene copolymer is contained in the polymer composition at a ratio of between 0.1 wt.-% and 80 wt.-%, preferably between 5 wt.-% and 60 wt.-%, particularly preferred between 8 wt.-% and 55 wt.-%.

3. The closure according to any one of claims 1 or 2, wherein the polymer composition comprises a further butene copolymer, wherein the butene copolymers are different kinds of polymers,
particularly wherein one comonomer of the further butene copolymer is ethylene; and/or
wherein the further butene copolymer is a butene bipolymer; and/or
wherein the further butene copolymer is contained in the polymer composition at a ratio of between 10 wt.-% and 80 wt.-%, preferably between 22 wt.-% and 70 wt.-%, particularly preferred between 40 wt.-% and 65 wt.-%.

4. The closure according to any one of claims 1 to 3, wherein the polymer composition comprises a polyethylene,
preferably wherein the polyethylene is a homo-polyethylene, particularly an LDPE or an HDPE; and/or
wherein the polyethylene is contained in the polymer composition at a ratio between 5 wt.-% and 60 wt.-%, preferably between 10 wt.-% and 45 wt.-%, particularly preferred between 15 wt.-% and 35 wt.-%.

5. The closure according to any one of claims 1 to 3, wherein the polymer composition comprises a random propylene copolymer,
particularly wherein ethylene is a comonomer of the random propylene copolymer; and/or
wherein the random propylene copolymer is a bipolymer; and/or
wherein the random propylene copolymer is contained in the polymer composition at a ratio of between 5 wt.-% and 60 wt.-%, preferably between 10 wt.-% and 45 wt.-%, particularly preferred between 15 wt.-% and 35 wt.-%.

6. The closure according to any of claims 1 to 3, wherein the polymer composition comprises a butene homopolymer,
particularly wherein the butene homopolymer is contained in the polymer composition at a ratio of between 5 wt.-% and 60 wt.-%, preferably between 10 wt.-% and 45 wt.-%, particularly preferred between 15 wt.-% and 35 wt.-%.

7. The closure according to any one of claims 1 or 2, wherein the polymer composition contains a copolymer which comprises styrene as a comonomer,
preferably wherein the copolymer comprising styrene as a comonomer is an SBS, SEPS, SEEPS or SEBS, in particular an SEBS; and/or
wherein the copolymer comprising styrene as a comonomer is contained in the polymer composition at a ratio of between 10 wt.-% and 70 wt. %, preferably between 20 wt.-% and 60 wt.-%, particularly preferred between 35 wt.-% and 55 wt.-%.

8. The closure according to claim 7, wherein the polymer composition comprises a butene homopolymer,
particularly wherein the butene homopolymer is contained in the polymer composition at a ratio of between 5 wt.-% and 60 wt.-%, preferably between 10 wt.-% and 45 wt.-%, particularly preferred between 15 wt.-% and 35 wt.-%.

9. The closure according to any one of claims 1 or 2, wherein the butene copolymer is contained in the polymer composition at a ratio of at least 80 wt.-%, preferably at least 90 wt.-%.

10. The closure according to any one of the preceding claims, wherein the polymer composition comprises a maximum of 10 wt.-% of homo-polypropylene, preferably no homo-polypropylene.

11. The closure according to any one of the preceding claims, wherein the polymer composition comprises a maximum of 10 wt.-%, preferably a maximum of 5 wt.-%, of a component that is liquid at 20 °C and 1000 hPa, particularly preferred wherein the polymer composition is free from a component that is liquid at 20 °C and 1000 hPa.

12. The closure according to any one of the preceding claims, wherein the polymer composition has a static friction coefficient, determined according to DIN EN ISO 8295, of a maximum of 0.50, preferably of a maximum of 0.40; and/or
wherein the polymer composition has an oxygen permeability rate, determined according to DIN 53380, of less than 500 cm³ m⁻² d⁻¹ bar⁻¹, preferably of less than 400 cm³ m⁻² d⁻¹ bar⁻¹; and/or
wherein the polymer composition has a total migration, determined according to DIN-EN 1186-14, of a maximum of 1.20 mg cm⁻², preferably of a maximum of 1.0 mg cm⁻², particularly preferred of a maximum of 0.8 mg cm⁻².

13. The closure according to any of the preceding claims, wherein the closure (1, 21, 41, 61) is a screw closure, particularly a lug closure (1), a press-on twist-off closure (21) or a composite closure (41, 61).

14. A container (5, 25, 45) with a container mouth (5a, 25a, 45a) and a closable opening at the end of the container mouth, wherein the opening is closed with a closure (1, 21, 41, 61) according to any one of claims 1 to 13.

15. A method of manufacturing a closed and filled container, comprising the steps of:
(a) providing a container (1, 21, 41, 61) with a container mouth (5a, 25a, 45a) and a closable opening at the end of the container mouth;
(b) filling the container with a food through the opening of the container;
(a) closing the opening of the container with a closure according to any one of claims 1 to 13.

## Revendications

1. Fermeture de récipient (1, 21, 41, 61) ayant un élément d'étanchéité (3, 23, 43, 63), dans laquelle
(a) l'élément d'étanchéité (3, 23, 43, 63) comprend une composition polymère ; et
(b) la composition polymère comprend un copolymère de butène, dans laquelle le copolymère de butène a une température de fusion Tₘ comprise entre 30 °C et 130 °C, dans laquelle la température de fusion Tₘ est déterminée par la seconde courbe d'échauffement d'une mesure DSC à une vitesse de chauffage de 10 °C min⁻¹.

2. Fermeture de récipient selon la revendication 1, dans laquelle la température de fusion Tₘ du copolymère de butène est comprise entre 40 °C et 125 °C, en particulier entre 80 °C et 125 °C ; et/ou
dans laquelle le propylène est un comonomère du copolymère de butène ; et/ou
dans laquelle le copolymère de butène est contenu dans la composition polymère à un taux compris entre 0,1 % en poids et 80 % en poids, de manière préférée entre 5 % en poids et 60 % en poids, de manière particulièrement préférée entre 8 % en poids et 55 % en poids.

3. Fermeture de récipient selon l'une des revendications 1 ou 2, dans laquelle la composition polymère comprend un copolymère de butène supplémentaire, dans laquelle les copolymères de butène sont différents types de polymère,
en particulier dans laquelle un comonomère du copolymère de butène supplémentaire est l'éthylène ; et/ou
dans laquelle le copolymère de butène supplémentaire est un bipolymère de butène ; et/ou
dans laquelle le copolymère de butène supplémentaire est contenu dans la composition polymère à un taux compris entre 10 % en poids et 80 % en poids, de manière préférée entre 22 % en poids et 70 % en poids, de manière particulièrement préférée entre 40 % en poids et 65 % en poids.

4. Fermeture de récipient selon l'une des revendications 1 à 3, dans laquelle la composition polymère comprend un polyéthylène,
dans laquelle le polyéthylène est de préférence un homo-polyéthylène, en particulier un LDPE ou un HDPE ; et/ou
dans laquelle le polyéthylène est contenu dans la composition polymère à un taux compris entre 5 % en poids et 60 % en poids, de manière préférée entre 10 % en poids et 45 % en poids, de manière particulièrement préférée entre 15 % en poids et 35 % en poids.

5. Fermeture de récipient selon l'une des revendications 1 à 3, dans laquelle la composition polymère comprend un copolymère statistique de propylène,
en particulier dans laquelle l'éthylène est un comonomère du copolymère statistique de propylène ; et/ou
dans laquelle le copolymère statistique de propylène est un bipolymère ; et/ou
dans laquelle le copolymère statistique de propylène est contenu dans la composition polymère à un taux compris entre 5 % en poids et 60 % en poids, de manière préférée entre 10 % en poids et 45 % en poids, de manière particulièrement préférée entre 15 % en poids et 35 % en poids.

6. Fermeture de récipient selon l'une des revendications 1 à 3, dans laquelle la composition polymère comprend un homopolymère de butène,
en particulier dans laquelle l'homopolymère de butène est contenu dans la composition polymère à un taux compris entre 5 % en poids et 60 % en poids, de manière préférée entre 10 % en poids et 45 % en poids, de manière particulièrement préférée entre 15 % en poids et 35 % en poids.

7. Fermeture de récipient selon l'une des revendications 1 ou 2, dans laquelle la composition polymère contient un copolymère comprenant du styrène en tant que comonomère,
dans laquelle le copolymère comprenant du styrène en tant que comonomère, est de préférence un SBS, SEPS, SEEPS ou SEBS, en particulier un SEBS ; et/ou
dans laquelle le copolymère comprenant du styrène en tant que comonomère est contenu dans la composition polymère à un taux compris entre 10 % en poids et 70 % en poids, de manière préférée entre 20 % en poids et 60 % en poids, de manière particulièrement préférée entre 35 % en poids et 55 % en poids.

8. Fermeture de récipient selon la revendication 7, dans laquelle la composition polymère comprend un homopolymère de butène,
en particulier dans laquelle l'homopolymère du butène est contenu dans la composition polymère à un taux compris entre 5 % en poids et 60 % en poids, de manière préférée entre 10 % en poids et 45 % en poids, de manière particulièrement préférée entre 15 % en poids et 35 % en poids.

9. Fermeture de récipient selon l'une des revendications 1 ou 2, dans laquelle le copolymère de butène est contenu dans la composition polymère à un taux d'au moins 80 % en poids, de préférence d'au moins 90 % en poids.

10. Fermeture de récipient selon l'une des revendications précédentes, dans laquelle la composition polymère comprend un maximum de 10 % en poids d'homo-polypropylène et ne contient de préférence aucun homo-polypropylène.

11. Fermeture de récipient selon l'une des revendications précédentes, dans laquelle la composition polymère comprend un maximum de 10 % en poids, de préférence un maximum de 5 % en poids, d'un composant liquide à 20 °C et 1 000 hPa, de manière particulièrement préférée la composition polymère ne comprend aucun composant liquide à 20 °C et 1 000 hPa.

12. Fermeture de récipient selon l'une des revendications précédentes, dans laquelle la composition polymère a un coefficient de frottement statique, déterminé selon la norme DIN EN ISO 8295, d'au plus 0,5, de préférence d'au plus 0,40 ; et/ou
dans laquelle la composition polymère a un taux de perméabilité à l'oxygène, déterminé selon la norme DIN 53380, inférieur à 500 cm³ m⁻² d⁻¹ bar⁻¹, de préférence inférieur à 400 cm³ m⁻² d⁻¹ bar⁻¹ ; et/ou
dans laquelle la composition polymère a une migration totale, déterminée selon la norme DIN EN 1186-14, d'au plus 1,20 mg cm⁻², de manière préférée d'au plus 1,0 mg cm⁻², de manière particulièrement préférée d'au plus 0,8 mg cm⁻².

13. Fermeture de récipient selon l'une des revendications précédentes, dans laquelle la fermeture de récipient (1, 21, 41, 61) est une fermeture à vis, en particulier une fermeture à came tournante (1), une fermeture quart de tour à pression (21) ou une fermeture composite (41, 61).

14. Récipient (5, 25, 45) ayant une embouchure de récipient (5a, 25a, 45a) et une ouverture pouvant être fermée à l'extrémité de l'embouchure de récipient, dans lequel l'ouverture est fermée par une fermeture de récipient (1, 21, 41, 61) selon l'une des revendications 1 à 13.

15. Procédé de fabrication d'un récipient fermé et rempli, comportant les étapes consistant à :
(a) fournir un récipient (1, 21, 41, 61) ayant une embouchure de récipient (5a, 25a, 45a) et une ouverture pouvant être fermée à l'extrémité de l'embouchure de récipient ;
(b) remplir le récipient d'une denrée alimentaire par l'ouverture du récipient ;
(c) fermer l'ouverture du récipient avec une fermeture de récipient selon l'une des revendications 1 à 13.
